Europäisches Patentamt

**European Patent Office**

**Office européen des brevets**

(11) Veröffentlichungsnummer: **0 296 347**

**A1**

(12) # EUROPÄISCHE PATENTANMELDUNG

(21) Anmeldenummer: **88107469.4**

(22) Anmeldetag: **10.05.88**

(51) Int. Cl.4: **A61C 9/00 , B05B 7/06**

(30) Priorität: **23.05.87 DE 8707431 U**

(43) Veröffentlichungstag der Anmeldung:
**28.12.88 Patentblatt 88/52**

(84) Benannte Vertragsstaaten:
**AT BE CH DE ES FR GB GR IT LI LU NL SE**

(71) Anmelder: **BAYER AG**
**Konzernverwaltung RP Patentabteilung**
**D-5090 Leverkusen 1 Bayerwerk(DE)**

(72) Erfinder: **Schulz, Hans Hermann**
**Wichheimer Strasse 288**
**D-5000 Köln 80(DE)**
Erfinder: **Massel, Hans-Dieter**
**Meerbuscher Strasse 10**
**D-4047 Dormagen(DE)**

(54) **Spritze zum Ausbringen von Dental-Abformmassen.**

(57) Die Spritze ist an ihrem vorderen Ende mit einer die Austragdüse (5) umgebenden Ringdüse (6) versehen. Zum Versprühen der Abformmasse kann dieser Ringdüse (6) über ein Ventil (11) Druckluft zugeführt werden.

EP 0 296 347 A1

## Spritze zum Ausbringen von Dental-Abformmassen

Die Erfindung betrifft eine Spritze zum Ausbringen und zur Applikation von viskosen Dental-Abformmassen. In der zahnärztlichen Praxis ist es üblich, bei der Abformung von Zähnen Abformmassespritzen zu benutzen. Zu diesem Zweck werden mittel- und niedrigviskose Abformmaterialien mit der Spritze auf den Zahn im Bereich der Präparationsgrenzen aufgetragen. Dabei kann ein Einschluß von Luftblasen nicht mit Sicherheit ausgeschlossen werden. Außerdem ist in vielen Fällen die Adaption (d. h. eine vollständige, lückenlose Anpassung) des Materials an die Zahnhartsubstanz unzureichend, da es praktisch drucklos auf die Zahnoberfläche, die häufig einen Feuchtigkeitsfilm aufweist, aufgebracht wird.

Es bestand daher die Aufgabe, eine Spritze zu entwickeln, mit der diese Fehlerquellen beim Abformprozeß eliminiert werden können.

Diese Aufgabe wird erfindungsgemäß dadurch gelöst, daß die am vorderen Ende des Spritzengehäuses vorhandene Düse als Zweistoffdüse ausgebildet ist und mit einer Druckluftzuführung versehen wird, die mit einem an der Spritze angeordneten Betätigungsventil verbunden ist.

Mit der neuen Spritze ist es möglich, in der ersten Phase der Applikation die Formmasse als dünne Schicht unter Druck auf die gesamte abzuformende Zahnoberfläche aufzusprühen. Im Anschluß daran wird dann durch Betätigung des Spritzenhebels die restliche Formmasse der aufgesprühten Schicht überlagert. Aufgrund des dünnen aufgesprühten Films haftet diese zweite Schicht einwandfrei auf der Oberfläche. Durch die neue Spritze und die dadurch mögliche Applikation in zwei Schritten können Lufteinschlüsse und Fehlstellen im Abdruck weitgehend vermieden werden.

Im folgenden wird eine Ausführungsform der Erfindung anhand einer Zeichnung näher erläutert:

Die Spritze besteht aus einem zylindrischen Spritzengehäuse 1, einem Kolben 2 mit Griff 3 und einem am vorderen Ende angebrachten Mundstück 4. Das Spritzenvolumen ist mit einer Abformmasse, z.B. Baysilex®, gefüllt. Das Mundstück 4 der Spritze ist im Gegensatz zu konventionellen Spritzen als Zweistoffdüse ausgebildet. Sie besteht aus dem konisch zulaufenden, mit dem Spritzenvolumen verbundenen Innenkanal 5 und einer den Innenkanal 5 konzentrisch umschliessenden Luftkammer 6. An der Düsenspitze 7 endet die Luftkammer 6 mit einem schmalen konzentrischen Ringspalt 8. An ihrem rückwärtigen Ende ist die Zweistoffdüse mit einer Oberwurfmutter 9 auf das Spritzengehäuse 1 aufgeschraubt. Die Luftkammer 6 steht über ein Röhrchen 10 mit einem am Spritzengehäuse 1 angeordneten Betätigungsventil 11 in Verbindung. Eingangsseitig ist dieses Ventil über eine flexible Druckleitung 12 an eine Druckluftquelle, z. B. eine Preßluftflasche mit Reduzierventil 13, angeschlossen.

Der Abformprozeß mit der neuen Spritze läuft in folgender Weise ab:

a) Vorbereitung des abzuformenden Gebietes und Auswahl eines geeigneten Abdrucklöffels.

b) Einfüllen der Abformmasse in die Spritze, nachdem der Kolben 2 herausgezogen wurde und das Spritzenvolumen zugänglich ist.

c) Einschieben des Kolbens 2 in das Spritzengehäuse 1 bis Abformmasse aus der Düsenspitze 7 austritt.

d) Aufsprühen einer dünnen Formmasseschicht auf den abzuformenden Bereich der Zahnhartsubstanz und Schleimhaut durch Betätigung des Ventils 11.

e) Oberschichtung der Deckschicht (gemäß d) mit Formmasse durch Vorschieben des Spritzenkolbens 2.

f) Einfüllen der restlichen Formmasse in den Abdrucklöffel und Aufsetzen des Abdrucklöffels zur eigentlichen Abformung.

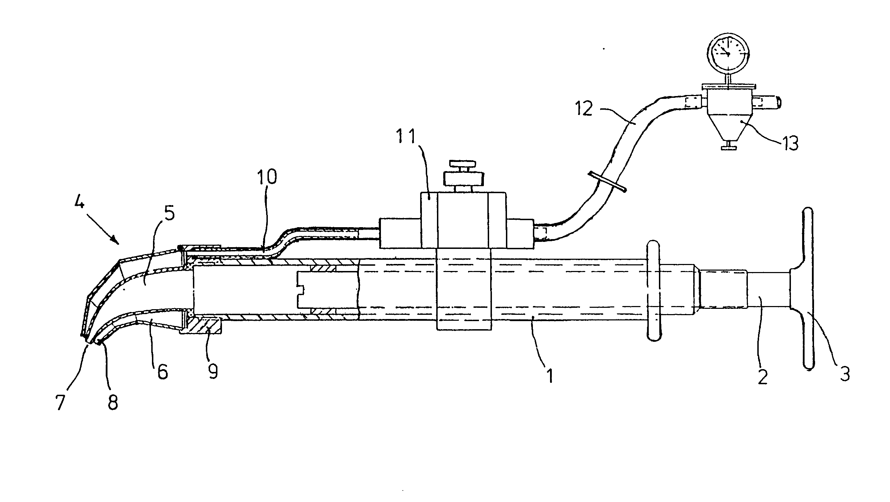

## Ansprüche

Spritze zum Ausbringen von Dental-Abformmassen mit einer Düse am vorderen Ende des Spritzengehäuses, dadurch gekennzeichnet, daß die Düse als Zweistoffdüse (5, 6) ausgebildet ist, die mit einer Druckluftzuführung (10) versehen ist, welche mit einem an der Spritze angeordneten Betätigungsventil (11) verbunden ist.

EP 0 296 347 A1

Europäisches
Patentamt

**EUROPÄISCHER RECHERCHENBERICHT**

Nummer der Anmeldung

EP 88 10 7469

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-3 827 147 (CONDON) <br> * Figuren 5,9-14; Spalte 4, Zeilen 22-34; Spalte 6, Zeilen 10-17,59-66 * <br> --- | 1 | A 61 C 9/00 <br> B 05 B 7/06 |
| X | US-A-4 264 305 (J.D. RASMUSSEN et al.) <br> * Figuren 2,8 * <br> --- | 1 | |
| X | NL-A-8 105 902 (DE KANTER) <br> * Figur; Anspruch 1 * <br> --- | 1 | |
| A | FR-A- 664 781 (FRAENKEL) <br> * Seite 1, Zeilen 30-46 * <br> --- | 1 | |
| A | DE-A-2 924 174 (HARTMAN et al.) <br> * Anspruch 6; Seite 1, Absatz 2 * <br> --- | | |
| A | US-A-3 389 838 (MORRA et al.) <br> * Figur; Spalte 1, letzter Absatz; Spalte 2, Absatz 1 * <br> --- | | |
| A | US-A-3 685 743 (SEBASTIANI) <br> * Figuren 7-9; Spalte 1, Absatz 1 * <br> ----- | | |

| RECHERCHIERTE SACHGEBIETE (Int. Cl.4) |
|---|
| A 61 C <br> B 05 B |

Der vorliegende Recherchenbericht wurde für alle Patentansprüche erstellt

| Recherchenort | Abschlußdatum der Recherche | Prüfer |
|---|---|---|
| DEN HAAG | 31-08-1988 | FISCHER G.H. |